# EUROPÄISCHE PATENTSCHRIFT

(11) **EP 1 250 719 B1**
(45) Veröffentlichungstag und Bekanntmachung des Hinweises auf die Patenterteilung: **30.08.2006**
(21) Anmeldenummer: 00991527.3
(22) Anmeldetag: 13.12.2000
(51) Int. Cl.: H01M 8/02, F28D 9/00

(54) **VERDAMPFER IN MIKROSTRUKTURTECHNIK SOWIE BRENNSTOFFZELLENSYSTEM**
MICROSTRUCTURED VAPORISER AND FUEL CELL SYSTEM
ÉVAPORATEUR MICROSTRUCTURÉ ET SYSTÈME DE PILE À COMBUSTIBLE

(30) Priorität: 23.12.1999 DE 19963594
(43) Veröffentlichungstag der Anmeldung: 23.10.2002
(73) Patentinhaber: P21 - Power for the 21st Century GmbH, 85649 Brunnthal (DE)
(72) Erfinder: KLOS, Holger, 81541 München (DE); SCHÜTZ, Walter, 95466 Weidenberg (DE); WALTER, Hermann, 74523 Schwäbisch Hall (DE)
(74) Vertreter: Müller, Thomas
(86) Internationale Anmeldenummer: PCT/DE2000/004496
(87) Internationale Veröffentlichungsnummer: WO 2001/048844

(56) Entgegenhaltungen:
- DE-A- 19 707 648
- DE-A- 19 935 433
- US-A- 5 901 037
- PATENT ABSTRACTS OF JAPAN vol. 011, no. 292 (E-543), 19. September 1987 (1987-09-19) & JP 62 090871 A (HITACHI LTD), 25. April 1987 (1987-04-25)
- PATENT ABSTRACTS OF JAPAN vol. 1999, no. 04, 30. April 1999 (1999-04-30) & JP 11 016590 A (MATSUSHITA ELECTRIC IND CO LTD), 22. Januar 1999 (1999-01-22)

## Beschreibung

Die vorliegende Erfindung betrifft zunächst eine Verdampfer-Vorrichtung in Mikrostrukturtechnik gemäß dem Oberbegriff von Patentanspruch 1. Weiterhin betrifft die Erfindung ein Brennstoffzellensystem gemäß dem Oberbegriff von Patentanspruch 13.

Vorrichtungen in Mikrostrukturtechnik zum Hindurchleiten von Medien sind bereits bekannt und werden in der Praxis auf verschiedene Weisen eingesetzt. Üblicherweise bestehen die Vorrichtungen aus einer Schichtabfolge einzelner Schichten, wobei die einzelnen Schichten jeweils eine Anzahl von Mikrokanälen aufweisen. An der Eintrittsseite der Vorrichtung verfügen die Mikrokanäle jeweils über eine Eintrittsöffnung, und an der Ausgangsseite der Vorrichtung über jeweils eine Austrittsöffnung. Die die Vorrichtung durchströmenden Medien treten an den Eintrittsöffnungen in die Mikrokanäle ein, durchströmen diese und verlassen die Vorrichtung anschließend über die jeweiligen Austrittsöffnungen. Durch die Ausgestaltung der Vorrichtung in Mikrotechnik wird erreicht, dass auf kleinstem Raum eine große Anzahl von Mikrokanälen vorliegt, deren Breite und Höhe nur im Bereich weniger Mikrometer liegt. Auf diese Weise verfügen die Vorrichtungen über extrem große spezifische innere Oberflächen, das heißt über ein sehr hohes Verhältnis von Kanaloberfläche zu Kanalvolumen.

Aus den älteren Druckschriften JP62090871A und JP11016590A sind jeweils Brennstoffzellenstapel bekannt, die Schichten in Kanalstruktur aufweisen. Dabei sind die Endbereiche der Kanäle flächenmäßig unterschiedlich ausgebildet.

Vorrichtungen in Mikrostrukturtechnik der genannten Art werden beispielsweise als Mikroreaktoren, Mikrowärmetauscher oder dergleichen eingesetzt. Insbesondere werden solche Vorrichtungen auch zum Verdampfen flüssiger Medien eingesetzt und werden dann in der Regel als Mikrostruktur-Verdampfer bezeichnet. Die Aufgabe eines Verdampfers besteht darin, flüssige Medien für eine Weiterverarbeitung zu verdampfen. Durch die Bauweise in Mikrostrukturtechnik wird bei Verdampfern erreicht, dass auf Grund der sehr großen Anzahl von Mikrokanälen und der damit verbundenen außerordentlich großen spezifischen inneren Oberfläche sowie der dünnen Bewandung mit deutlich kleinerer Wanddicke als der Durchmesser eines Mikrokanals ein ganz besonders effektiver Wärmeübergang zwischen dem zu verdampfenden Medium und einem entsprechenden Wärmeträgermedium gewährleistet ist.

Eine vorteilhafte, beispielhafte Anwendungsmöglichkeit für Verdampfer liegt im Bereich der Brennstoffzellentechnologie. Brennstoffzellen sind bereits seit langem bekannt und haben insbesondere im Bereich der Automobilindustrie in den letzten Jahren erheblich an Bedeutung gewonnen.

Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden. Dabei liegt den Brennstoffzellen das Funktionsprinzip zu Grunde, dass sich elektrisch neutrale Moleküle oder Atome miteinander verbinden und dabei Elektronen austauschen. Dieser Vorgang wird als Redoxprozess bezeichnet. Bei der Brennstoffzelle werden die Oxidations- und Reduktionsprozesse über eine Membran räumlich voneinander getrennt. Solche Membranen haben die Eigenschaft, Protonen auszutauschen, Gase jedoch zurückzuhalten. Die bei der Reduktion abgegebenen Elektronen lassen sich als elektrischer Strom durch einen Verbraucher leiten, beispielsweise den Elektromotor eines Automobils.

Als gasförmige Reaktionspartner für die Brennstoffzelle werden beispielsweise Wasserstoff als Brennstoff und Sauerstoff als Oxidationsmittel verwendet. Will man die Brennstoffzelle mit einem leicht verfügbaren oder leicht zu speichernden Brennstoff wie Erdgas, Methanol, Benzin oder dergleichen betreiben, muss man diese Kohlenwasserstoffe in einer Anordnung zum Erzeugen/Aufbereiten eines Brennstoffs zunächst in ein wasserstoffreiches Gas umwandeln. Bei wenigstens einem der Bauelemente der Anordnung zum Erzeugen/Aufbereiten des Brennstoffs handelt es sich um einen Verdampfer. Der Verdampfer hat die Aufgabe, einen flüssigen Ausgangsstoff (flüssiger Brennstoff oder Wasser) für die Brennstoffaufbereitung zunächst zu verdampfen, bevor dieser in dampfförmigem Zustand in das nächste Reaktorelement, beispielsweise einen Reformer, eingeleitet wird.

Wenn ein Verdampfer in Verbindung mit einem Brennstoffzellensystem - etwa einem Brennstoffzellensystem für ein Fahrzeug - verwendet werden soll, steht in der Regel nur ein geringes Platzangebot für den Einbau zur Verfügung. Aus diesem Grund müssen die einzelnen Komponenten des Brennstoffzellensystems möglichst klein ausgebildet werden. Zu diesem Zweck kann beispielsweise ein Verdampfer in Mikrostrukturtechnik verwendet werden.

Wenn solche Verdampfer eingesetzt werden sollen, ergeben sich jedoch eine Reihe von Nachteilen. So tritt beispielsweise das Problem auf, dass ein die entsprechenden Mikrokanäie durchströmendes, zu verdampfendes, flüssiges Medium nur teilweise verdampft wird und die entstehenden Dämpfe beziehungsweise Dampfblasen noch nicht verdampfte Flüssigkeit in Form von Flüssigkeitstropfen zusammen mit Dampf aus den Mikrokanälen und damit aus dem Verdampfer heraustreiben.

Weiterhin kann es auf Grund von nicht konstanten Strömungsgeschwindigkeiten zu sogenannten "Pulsationen" kommen. Bei solchen Pulsationen handelt es sich um Schwingungen des die Mikrokanäle durchströmenden Mediums. Das bedeutet, dass die den Verdampfer durchströmenden Medien keine konstante Strömungsgeschwindigkeit haben, sondern dass die Strömungsgeschwindigkeit auf Grund von äußeren Einflüssen oder aufgrund diskontinuierlicher Verdampfungsprozesse in den Mikrokanälen im Zeitverlauf variieren kann. Dadurch variiert auch die Verdampfungsrate des Verdampfers. Beim Betrieb eines Brennstoffzellensystems ist es jedoch erforderlich, dass die einzelnen Reaktionsschritte in der Vorrichtung zum Erzeugen/Aufbereiten des Brennstoffs genau gesteuert ablaufen, um den Brennstoff, beispielsweise Wasserstoff, für die Brennstoffzelle in der erforderlichen Weise erzeugen zu können. Pulsationen sind aber nicht nur störend, sondern können sich sogar derart aufschaukeln, dass sie zur Zerstörung des Verdampfers führen.

Aus der WO 01/08799 A1 ist eine Vorrichtung in Mikrostrukturtechnik zum Hindurchleiten von Fluiden bekannt, wobei die Ein- und Austrittsöffnungen der Kanäle flächenmäßig, als auch geometrisch unterschiedlich ausgebildet sein können. Bei dieser bekannten Vorrichtung handelt es sich um einen mikrofluidischen Reaktionsträger, der je nach Ausführungsform eine rein fluidische oder auch eine lichtgesteuerte Synthese und Analyse von Oligomeren oder Polymeren ermöglicht. Im US-Patent 5,901,037 ist eine Kühlvorrichtung für Halbleiter beschrieben, bei der ein Kühlmedium durch in einer homogenen Schicht integrierte Kanalstrukturen fließt.

Ausgehend vom genannten Stand der Technik liegt der vorliegenden Erfindung die Aufgabe zugrunde, eine Verdampfer-Vorrichtung in Mikrostrukturtechnik zu schaffen, mit der die beschriebenen Nachteile vermieden werden. Weiterhin soll ein entsprechend verbessertes Brennstoffzellensystem bereitgestellt werden.

Diese Aufgabe wird gemäß dem ersten Aspekt der Erfindung durch eine Verdampfer-Vorrichtung in Mikrostrukturtechnik gelöst, die einen schichtförmigen Aufbau aufweist. Die Vorrichtung weist wenigstens eine erste homogene Schicht mit einer Anzahl von Mikrokanälen und wenigstens eine zweite homogene Schicht mit ebenfalls einer Anzahl von Mikrokanälen auf, wobei die Mikrokanäle jeweils eine durch die Strömungsrichtung des Mediums festgelegte Eintrittsöffnung und eine Austrittsöffnung aufweisen. Die Vorrichtung ist erfindungsgemäß dadurch gekennzeichnet, dass die Austrittsöffnungen der Mikrokanäle der ersten und/oder zweiten Schicht im Querschnitt flächenmäßig kleiner ausgebildet sind als deren jeweilige Eintrittsöffnungen und/oder dass die Austrittsöffnungen der Mikrokanäle der ersten und/oder zweiten Schicht eine andere geometrische Form aufweisen als deren jeweilige Eintrittsöffnungen, derart, dass in den Mikrokanälen der Strömungswiderstand für das zu verdampfende Medium zu den Austrittsöffnungen hin erhöht wird.

Die erfindungsgemäße Vorrichtung wird als Mikrostruktur-Verdampfer, insbesondere als Verdampfer in einem Brennstoffzellensystem eingesetzt, so dass die Erfindung im folgenden an Hand eines solchen Mikrostruktur-Verdampfers beschrieben wird.

Durch die Ausgestaltung des Verdampfers in Mikrostrukturtechnik wird zunächst erreicht, dass dieser bezogen auf seine Leistung besonders platzsparend ausgebildet werden kann. Die Ausgestaltung des Verdampfers in Mikrostrukturtechnik sieht im allgemeinen vor, dass auf einem kleinen Bauraum im Kubikzentimeterbereich eine große Anzahl von mehreren tausend Mikrokanälen vorgesehen ist. Durch diese Mikrokanäle, die jeweils eine Höhe und Breite von nur wenigen Mikrometern aufweisen, werden große spezifische Oberflächen, das heißt hohe Verhältnisse von Kanaloberfläche zu Kanalvolumen, bei extrem kleinen Wanddicken geschaffen, über die der Wärmeaustausch besonders effektiv und schnell erfolgt. Dadurch sind solche Verdampfer bezogen auf das Bauvolumen extrem leistungsfähig.

Der Verdampfer weist wenigstens eine mit Mikrokanälen versehene erste Schicht auf, durch die das zu verdampfende flüssige Medium hindurchgeleitet wird. Weiterhin ist wenigstens eine zweite Schicht vorgesehen, die zur Wärmeübertragung beziehungsweise zum Hindurchleiten eines erhitzten Wärmeträgermediums ebenfalls eine Anzahl von Mikrokanälen aufweist. Wenn nun das zu verdampfende flüssige Medium die Mikrokanäle der ersten Schicht durchströmt, wird es durch das die Mikrokanäle der zweiten Schicht durchströmende Wärmeträgermedium erhitzt und verdampft. Das Wärmeträgermedium kann in diesem Fall beispielsweise ein Thermoöl oder dergleichen sein. Das Wärmeträgermedium kann außerhalb des Verdampfers durch eine Heizquelle erhitzt und in erhitztem Zustand durch die dafür vorgesehenen Mikrokanäle des Verdampfers hindurchgeleitet werden. Die vom Wärmeträgermedium gespeicherte Wärmeenergie wird dabei zu einem Grossteil an das zu verdampfende flüssige Medium abgegeben.

Natürlich kann die zum Verdampfen des flüssigen Mediums erforderliche Wärme auch auf andere Weise bereitgestellt werden. So können die Mikrokanäle der zweiten Schicht, die für das Wärmeträgermedium vorgesehen sind, beispielsweise mit einer Schicht eines katalytischen Materials beschichtet sein, das ein durch die Mikrokanäle geleitetes reaktionsfähiges Brennstoff/Sauerstoffgemisch unter Abgabe von Wärme zur Reaktion bringt. Diese Wärme kann auf das zu verdampfende flüssige Medium, das die Mikrokanäle der ersten Schicht durchströmt, übertragen werden.

Alternativ ist es auch denkbar, die für die Verdampfung erforderliche Wärme elektrisch zu erzeugen. So können in den Mikrokanälen der zweiten Schicht entsprechende Heizelemente angeordnet sein, die elektrisch versorgt werden. Derartige Heizelemente können beispielsweise, jedoch nicht ausschließlich, als Heizdrähte, Heizpatronen oder dergleichen ausgebildet sein. Bei Betrieb einer mit den Heizelementen verbundenen elektrischen Leistungsquelle wird in den Mikrokanälen der zweiten Schicht Wärme erzeugt, die dann an das zu verdampfende flüssige Medium übertragen werden kann.

Um zu verhindern, dass die beim Verdampfen entstehenden Dampfblasen noch nicht verdampfte Flüssigkeit aus den Mikrokanälen austreiben oder dass es zu den oben beschriebenen "Pulsationen" kommt, ist erfindungsgemäß vorgesehen, dass die Austrittsöffnungen der Mikrokanäle der ersten und/oder zweiten Schicht im Querschnitt flächenmäßig kleiner ausgebildet sind als deren jeweilige Eintrittsöffnungen und/oder dass die Austrittsöffnungen eine den Strömungswiderstand gegenüber den Eintrittsöffnungen erhöhende andere geometrische Form haben. Durch eine solche andersartige Ausgestaltung der Austrittsöffnungen im Vergleich zu den jeweils entsprechenden Eintrittsöffnungen wird es möglich, das Prinzip der sogenannten "überhitzten Flüssigkeiten" für die erfindungsgemäße Vorrichtung nutzbar zu machen.

Dieses Prinzip besagt, dass sich die Verdampfung einer Flüssigkeit beispielsweise durch Erhöhung des Drucks kontrolliert verzögern lässt. Unter erhöhtem Druck kann eine Flüssigkeit erst später verdampfen, als dies bei Umgebungsdruck der Fall ist. Wenn eine solche unter höherem Druck stehende, ausreichend hoch erhitzte Flüssigkeit entspannt wird, geht diese schlagartig von dem flüssigen in den dampfförmigen Zustand über. Dies kann beispielsweise bei einem weiter unten näher beschriebenen Brennstoffzellenprozess von Vorteil sein. Wesentlich ist dabei, dass die überhitzte Flüssigkeit mindestens soviel Wärme aufgenommen hat, wie für eine vollständige Verdampfung notwendig ist.

Wenn die Austrittsöffnungen der Mikrokanäle im Querschnitt flächenmäßig kleiner sind als deren jeweilige Eintrittsöffnungen, führt dies dazu, dass sich das die Mikrokanäle durchströmende Medium in diesen aufstaut. Dadurch erhöht sich der Druck des Mediums innerhalb der Mikrokanäle. Um das die Mikrokanäle durchströmende Medium zu verdampfen, wird es durch einen entsprechenden Wärmeträger, der sich in den Mikrokanälen einer benachbarten Schicht befindet, erhitzt. Auf Grund des erhöhten Drucks das zu verdampfenden Mediums in den entsprechenden Mikrokanälen kann dort eine Verdampfung des Mediums unterdrückt werden. Das zu verdampfende Medium liegt somit auch noch bei solchen Temperaturen im flüssigen Zustand vor, bei denen es unter Normaldruck bereits verdampft wäre. Wenn das in den Mikrokanälen aufgestaute überhitzte flüssige Medium durch die kleineren Austrittsöffnungen der Mikrokanäle entweicht, geht es schlagartig von dem flüssigen in den dampfförmigen Zustand über.

Ein wie vorstehend beschriebener Effekt kann beispielsweise auch dann auftreten, wenn die Austrittsöffnungen der Mikrokanäle eine im Vergleich zu den jeweiligen Eintrittsöffnungen anders gestaltete geometrische Form aufweisen. Diese anders gestaltete Form ist so ausgelegt, dass hierdurch der Strömungswiderstand für das zu verdampfende Medium erhöht wird, so dass der erforderliche Staueffekt eintritt.

Durch die erfindungsgemäße Ausgestaltung kann die Vorrichtung beziehungsweise der Verdampfer trotz vergleichsweise hoher Leistung mit extrem kleinerer Baugröße hergestellt werden. Zum Verdampfen von Flüssigkeiten ist eine bestimmte Verweilzeit in den Mikrokanälen erforderlich. Bei den bisher bekannten Mikrostruktur-Verdampfern wird diese Verweilzeit neben der Strömungsgeschwindigkeit des zu verdampfenden Mediums unter anderem auch über die Länge der Mikrokanäle, die vom zu verdampfenden Medium durchströmt werden, bestimmt. Durch die erfindungsgemäße Ausgestaltung der Vorrichtung wird zur Erzielung des Überhitzungszustands der zu verdampfenden Flüssigkeit ein Staueffekt in den Mikrokanälen erzeugt. Dieser Staueffekt führt zu einer längeren Verweilzeit des Mediums in den Mikrokanälen, so dass dadurch die Gesamtlänge der Mikrokanäle verkürzt werden kann.

Die Einstellung eines erhöhten Drucks für das zu verdampfende Medium erfolgt über eine Fördereinrichtung, beispielsweise über eine entsprechende Pumpe, wie dies im weiteren Verlauf der Beschreibung unter Bezugnahme auf das erfindungsgemäße Brennstoffzellensystem näher erläutert wird.

Je nach Bedarf und Anwendungsfall kann vorgesehen sein, dass nur jeweils eine der Schichten, oder aber dass beide Schichten Mikrokanäle aufweisen, bei denen die Austrittsöffnungen flächenmäßig kleiner und/oder geometrisch anders ausgebildet sind als die entsprechenden Eintrittsöffnungen. Bei der erfindungsgemäßen Vorrichtung als Verdampfer kann es ausreichend sein, dass nur eine der Schichten, nämlich diejenige Schicht, durch die das zu verdampfende flüssige Medium strömt, die erfindungsgemäße Ausgestaltung der Mikrokanäle aufweist.

Die Erfindung ist nicht auf bestimmte Ausgestaltungsformen der einzelnen Mikrokanäle beschränkt. Beispielsweise können die Mikrokanäle als offene Nutkonstruktionen in eine Schicht eingearbeitet oder als geschlossene Leitungen ausgebildet sein. Besonders vorteilhaft sind die einzelnen Kanäle jedoch als offene Nutkonstruktionen ausgebildet, da dies eine besonders einfache und kostengünstige Herstellung ermöglicht. Die erforderliche Abdeckung der offenen Seite dieser Nutkonstruktionen erfolgt dann jeweils über die nächste unmittelbar aufliegende Schicht, wie dies im weiteren Verlauf der Beschreibung noch näher erläutert wird.

Die einzelnen Mikrokanäle der ersten und/oder zweiten Schicht können im Grundsatz jeden beliebigen Querschnitt aufweisen. So ist es denkbar, dass die Mikrokanäle in ihrer Längsausdehnung (Ausdehnung zwischen Eintrittsöffnung und Austrittsöffnung) einen konstanten Querschnitt haben. Allerdings ist es auch möglich, dass die Mikrokanäle in Längsausdehnung zumindest in Teilbereichen einen sich ändernden Querschnitt haben. Beispielsweise können die Mikrokanäle einen runden, ovalen, elliptischen, mehreckigen Querschnitt oder dergleichen aufweisen.

Die einzelnen Schichten der erfindungsgemäßen Vorrichtung können beispielsweise hergestellt werden, indem die einzelnen Schichten zunächst als Vollmaterial (plattenförmig) hergestellt werden. Anschließend können die einzelnen Mikrokanäle durch ein geeignetes Verfahren in diese Schichten eingebracht werden. Dies kann beispielsweise mittels eines Ätzverfahrens erfolgen. Eine andere Möglichkeit besteht darin, die einzelnen Mikrokanäle durch spanende Bearbeitung in die Schichten einzugraben. Die Erfindung ist nicht auf bestimmte Herstellungsverfahren beschränkt.

Nach Fertigstellung der einzelnen Schichten werden diese vorteilhaft derart miteinander verbunden, dass zwischen ihnen ein guter thermischer Austausch stattfinden kann. Das Material der Schichten weist vorteilhaft eine besonders gute Wärmeleitfähigkeit auf. Wegen der vergleichsweise geringen Dicke der Schichten sind die Anforderungen an die Wärmeleitfähigkeit im Grundsatz aber nicht sonderlich hoch.

Vorteilhafte Ausführungsformen der erfindungsgemäßen Vorrichtung ergeben sich aus den Unteransprüchen.

Vorzugsweise verjüngen sich die Mikrokanäle der wenigstens einen ersten und/oder der wenigstens einen zweiten Schicht zwischen den Eintrittsöffnungen und den Austrittsöffnungen jeweils zu den Austrittsöffnungen hin. Derartige Mikrokanäle sind besonders einfach herzustellen und ermöglichen eine genaue Steuerung oder Regelung der Strömungsgeschwindigkeit und der Durchflussrate des die Mikrokanäle durchströmenden Mediums. Bei der erfindungsgemäßen Vorrichtung als Verdampfer kann über die Verjüngung der Mikrokanäle gezielt erreicht werden, dass sich der Druck des zu verdampfenden flüssigen Mediums zumindest in Teilbereichen der Mikrokanäle derart erhöht, dass der Effekt der "überhitzten Flüssigkeit" in den Mikrokanälen auftritt. Wenn sich die Mikrokanäle in nur einem Abmessungsparameter, beispielsweise über ihre Breite, verjüngen, gestattet dies eine einfache und damit kostengünstige Herstellung der Mikrokanäle der erfindungsgemäßen Vorrichtung. Vorteilhaft können sich die Mikrokanäle in ihrer Längsrichtung über die gesamte Länge kontinuierlich verjüngen. In anderer zweckmäßiger Ausgestaltung verjüngen sich die Mikrokanäle nur in ihren jeweiligen Endbereichen, d. h. erst relativ kurz vor der jeweiligen Austrittsöffnung.

Die Verjüngung wirkt als eine Art Strömungsventil, das den Querschnitt des Strömungskanals definiert verkleinert.

In weiterer Ausgestaltung können die Wände der Mikrokanäle der ersten und/oder zweiten Schicht aus im wesentlichen ebenen Wandabschnitten gebildet sein. Besonders zweckmäßig ist es, wenn die sich gegenüberliegenden Seitenwände der Mikrokanäle über den größten Teil ihrer axialen Länge parallel zueinander verlaufen und in einem Endbereich bis zur jeweiligen Austrittsöffnung mit einem kürzeren Wandabschnitt in einem spitzen Winkel aufeinander zu laufen.

Weiterhin ist es möglich, dass wenigstens eine Wand der Mikrokanäle uneben ausgebildet ist. Durch die unebene Ausbildung einer oder mehrerer Wände der Mikrokanäle können gezielt Turbulenzen in dem die Mikrokanäle durchströmenden Medium erzeugt werden. Durch die Einstellung solcher Turbulenzen ist es möglich, Einfluss auf die Strömungsgeschwindigkeit und die Durchflussrate sowie den Druck des die Mikrokanäle durchströmenden Mediums zu nehmen. Beispielsweise kann die wenigstens eine unebene Wand des Mikrokanals wellenförmig ausgebildet sein.

In weiterer Ausgestaltung können die Mikrokanäle der ersten und/oder zweiten Schicht eine turbulenzfördernde Oberflächenstruktur aufweisen. Hierbei ist die Erfindung nicht auf bestimmte Strukturen beschränkt. Wichtig ist lediglich, die Strömung des die Mikrokanäle durchströmenden Mediums in eine turbulente Strömung umzuwandeln. Als turbulenzfördernde Strukturen können beispielsweise winklige Kanalstrukturen eingesetzt werden. Das die Mikrokanäle durchströmende Medium strömt dann gegen die winklig zueinander stehenden Kanalwände. Dadurch wird eine Verwirbelung des Mediums und nicht zuletzt auch ein verstärkter Wärmeübergang erreicht. Die turbulenzfördernden Strukturen können beispielsweise über die gesamte Längsausdehnung der Mikrokanäle vorhanden sein. Es ist jedoch auch denkbar, dass die turbulenzfördernden Strukturen nur in bestimmten Teilbereichen der Mikrokanäle ausgebildet sind.

In einer beispielhaften Ausführungsform der erfindungsgemäßen Vorrichtung können sich diejenigen Mikrokanäle, bei denen die Austrittsöffnungen flächenmäßig kleiner, ausgebildet sind als die jeweiligen Eintrittsöffnungen, in Längsausdehnung kontinuierlich verjüngen, wobei jeweils zwei der Kanalwände uneben, beispielsweise wellenförmig, ausgebildet sind. Bei den uneben ausgebildeten Kanalwänden kann es sich entweder in bevorzugter Weise um die beiden Seitenwände oder um den Kanalboden oder die Kanaldecke handeln.

Ziel bei den wie vorstehend beschriebenen verschiedenen Kanalstrukturen ist es immer, eventuell vorliegende laminare Strömungen durch eine geeignete Variation der Kanalstruktur in turbulente Strömungen zu überführen. Durch die Turbulenz der Strömung wird eine Durchmischung und somit eine homogenere Temperaturverteilung erreicht, so dass eine besonders kurze Bauform des Verdampfers ermöglicht wird.

Vorzugsweise können diejenigen Austrittsöffnungen der Mikrokanäle, die flächenmäßig kleiner als die Eintrittsöffnungen ausgebildet sind und/oder eine andere geometrische Form als diese aufweisen, einen runden, ovalen oder elliptischen Querschnitt aufweisen.

In anderer Ausgestaltung können diejenigen Austrittsöffnungen der Mikrokanäle, die flächenmäßig kleiner als die Eintrittsöffnungen ausgebildet sind und/oder eine andere geometrische Form als diese aufweisen, einen mehreckigen Querschnitt aufweisen. Hierbei kann es sich beispielsweise um einen Dreiecksquerschnitt, einen Vierecksquerschnitt oder einen Querschnitt mit noch mehr Ecken handeln. Besonders vorteilhaft weisen die Austrittsöffnungen einen viereckigen, insbesondere etwa quadratischen oder rechteckigen Querschnitt auf. Die Auswahl der Querschnittsfläche und der Querschnittsform kann je nach Bedarf und Anwendungsfall variieren, so dass die Erfindung nicht auf bestimmte Querschnitte beschränkt ist. Wenn beispielsweise eine Kanalwand eine unebene Form aufweist, kann sich diese unebene Geometrie beispielsweise auch in der Querschnittsfläche der Austrittsöffnung wiederfinden. Ebenso können die Mikrokanalquerschnitte je nach Bedarf in der weiter oben beschriebenen Weise variiert und den jeweiligen Bedürfnissen angepasst werden.

Vorteilhaft können jeweils mehrere erste Schichten und mehrere zweite Schichten vorgesehen sein. Vorzugsweise sind jeweils eine erste Schicht und eine alternierende zweite Schicht abwechselnd übereinander angeordnet, so dass eine Schichtabfolge entsteht. Die Anzahl der für die Verdampfer- vorrichtung verwendeten ersten und zweiten Schichten ergibt sich insbesondere aus der Leistungsanforderung an die Vorrichtung.

In vorteilhafter Ausgestaltung können die Längsachsen der Mikrokanäle der ersten Schicht und der zweiten Schicht winklig, vorzugsweise in einem rechten Winkel zueinander ausgerichtet sein. Auf diese Weise ist die Vorrichtung in der sogenannten "Kreuzstrombauweise" ausgebildet. Die Verwendung des Vorrichtung als Verdampfer bedeutet, dass die zu verdampfende Flüssigkeit in einer Strömungsrichtung durch die entsprechenden Kanäle strömt, die senkrecht zur Ausrichtung der Kanäle, in der sich der Wärmeträger befindet, ausgerichtet ist.

Es ist jedoch auch denkbar, dass die Mikrokanäle der ersten Schicht und die Mikrokanäle der zweiten Schicht parallel zueinander ausgerichtet sind. In einer solchen Bauweise können die zu verdampfende Flüssigkeit und das Wärmeträgermedium, wenn es beispielsweise flüssig oder gasförmig ausgebildet ist, die jeweiligen Mikrokanäle vorteilhaft im "Gegenstrom" durchströmen.

Bei der Vorrichtung als Verdampfer sind die Eintrittsöffnungen der ersten Schicht jeweils mit der Zuleitung für das zu verdampfende Medium und deren kleinere oder anders geformte Austrittsöffnungen mit einem Expansionsraum verbindbar, während die Eintrittsöffnungen der zweiten Schicht mit einer Zuleitung für das Wärmeträgermedium verbindbar ist.

Gemäß dem zweiten Aspekt der vorliegenden Erfindung wird ein Brennstoffzellensystem bereitgestellt, mit einer oder mehreren Brennstoffzellen, die wenigstens eine Zuleitung und wenigstens eine Ableitung für einen Brennstoff sowie wenigstens eine Zuleitung und wenigstens eine Ableitung für ein Oxidationsmittel aufweist/aufweisen, und mit einer Vorrichtung zum Erzeugen/Aufbereiten des Brennstoffs, die eine Anzahl von Reaktorelementen aufweist. Wenigstens eines der Reaktorelemente ist als eine wie vorstehend beschriebene erfindungsgemäße Verdampfer-Vorrichtung in Mikrostrukturtechnik ausgebildet.

Zu den Vorteilen, Effekten, Wirkungen und der Funktionsweise des erfindungsgemäßen Brennstoffzellensystems wird auf die vorstehenden Ausführungen zur erfindungsgemäßen Vorrichtung in Mikrostrukturtechnik vollinhaltlich Bezug genommen und hiermit verwiesen.

Vorteilhaft kann die Vorrichtung zum Erzeugen/Aufbereiten des Brennstoffs als Reaktorelemente einen Verdampfer, einen Reformer, einen Shift-Reaktor und eine selektive Oxidation aufweisen. Die einzelnen Reaktorelemente können über entsprechende Leitungen miteinander verbunden sein, so dass der Brennstoff während seiner Erzeugung beziehungsweise Aufbereitung die einzelnen Reaktorelemente durchströmt.

In einigen der Reaktorelemente finden dabei exotherme Reaktionen statt, das heißt, es wird Wärme frei. In anderen Reaktorelementen wird hingegen Wärme benötigt.

Ein Verdampfer ist etwa erforderlich, wenn Wasserstoff aus Methanol, Benzin, Ethanol oder anderen flüssigen Kohlenwasserstoffen oder dergleichen reformiert werden soll. Dem Verdampfer muss zum Betrieb Wärme zugeführt werden. Dabei handelt es sich bei dem Reaktorelement, das als erfindungsgemäße Vorrichtung in Mikrostrukturtechnik ausgebildet ist, um den Verdampfer.

Bei einem anderen Reaktorelement handelt es sich um einen Reformer, der dem Verdampfer nachgeschaltet ist, und in dem das Ausgangsmaterial des Brennstoffs zum für die Brennstoffzelle geeigneten Brennstoff, beispielsweise zu Wasserstoff, reformiert wird.

Ein weiteres Reaktorelement kann beispielsweise als selektive Oxidation ausgebildet sein. Dieses Reaktorelement ist erforderlich, wenn der erzeugte Wasserstoff durch das Verfahren der partiellen Oxidation weiter gereinigt wird.

Das Gas wird in einem Shift-Reaktor, der der selektiven Oxidation vorgeschaltet ist, zunächst durch eine homogene Wassergasreaktion vorgereinigt.

Anschliessend wird es in die selektive Oxidation eingeleitet und dort feingereinigt.

Vorzugsweise können die Mikrokanäle derjenigen Schicht oder Schichten der Vorrichtung, die eine gegenüber der Eintrittsöffnung flächenmäßig kleinere und/oder geometrisch anders geformte Austrittsöffnung aufweisen, mit einer Zuleitung verbunden sein, in der eine Fördereinrichtung, insbesondere eine Pumpe, angeordnet ist. Bei der Zuleitung handelt es sich vorzugsweise um eine Kraftstoffzuleitung, über die als Ausgangsmaterial für den Brennstoff flüssiger Kraftstoff in die Vorrichtung zum Erzeugen/Aufbereiten des Brennstoffs eingeleitet wird. Üblicherweise ist das erste Reaktorelement in der Vorrichtung zum Erzeugen/Aufbereiten des Brennstoffs der Verdampfer. Durch die erfindungsgemäße Ausgestaltung des Verdampfers kann dieser nach dem Prinzip der "überhitzten Flüssigkeit" betrieben werden. Um den dazu in den Mikrokanälen erforderlichen erhöhten Druck des zu verdampfenden flüssigen Mediums erreichen zu können, ist neben der erfindungsgemäßen Ausgestaltung der Mikrokanäle zusätzlich die Fördereinrichtung vorgesehen, die beispielsweise als Pumpe ausgebildet ist. Über die Pumpe kann der Druck der zu verdampfenden Flüssigkeit eingestellt werden.

In weiterer Ausgestaltung sind die Mikrokanäle derjenigen Schicht oder Schichten der Vorrichtung , die eine gegenüber der Eintrittsöffnung flächenmäßig kleinere und/oder geometrisch anders geformte Austrittsöffnung aufweisen, mit einem Expansionsraum verbunden. Als "Raum" kann im vorliegenden Fall allgemein eine umgrenzte Fläche verstanden werden. Ein solcher Expansionsraum kann verschiedene Ausgestaltungen haben. So kann er beispielsweise als entsprechend dimensionierte Rohrleitung ausgebildet sein, die die Verdampfer-Vorrichtung mit dem nächsten Reaktorelement, beispielsweise einem Reformer, verbindet. Es ist aber möglich, dass der Verdampfer direkt mit dem Reformer verbunden ist, so dass der Expansionsraum als Teilbereich des Reformers ausgebildet ist. Die Erfindung ist jedoch nicht auf die beiden beschriebenen Beispiele beschränkt.

Wie weiter oben bereits beschrieben wurde, wird die in den Mikrokanälen mit erhöhtem Druck aufgestaute, überhitzte Flüssigkeit nach dem Austritt aus den im Verhältnis zu den Eintrittsöffnungen anders ausgebildeten Austrittsöffnungen auf Normaldruck entspannt, wodurch die Flüssigkeit schlagartig vom flüssigen in den dampfförmigen Zustand übergeht. Diese Entspannung erfolgt vorzugsweise in einem Expansionsraum, der im Vergleich zum Volumen der Mikrokanäle ein wesentlich größeres Volumen aufweist. Das Raumvolumen und die Raumform des Expansionsraums können je nach Bedarf und Anwendungsfall beliebig ausgewählt werden.

Vorteilhaft kann ein wie vorstehend beschriebenes Brennstoffzellensystem in einem oder für ein Fahrzeug verwendet werden. Auf Grund der rasanten Entwicklung in der Brennstoffzellentechnologie im Fahrzeugsektor bietet eine solche Verwendung zur Zeit besonders gute Einsatzmöglichkeiten. Dennoch sind auch andere Einsatzmöglichkeiten denkbar. Zu nennen sind hier beispielsweise Brennstoffzellen für mobile Geräte wie Computer oder dergleichen bis hin zu stationären Einrichtungen wie Kraftwerksanlagen. Besonders eignet sich die Brennstoffzellentechnik auch für die dezentrale Energieversorgung von Häusern, Industrieanlagen oder dergleichen.

In bevorzugter Weise wird die vorliegende Erfindung in Verbindung mit Brennstoffzellen mit Polymermembranen (PEM) verwendet. Diese Brennstoffzellen haben einen hohen elektrischen Wirkungsgrad, verursachen nur minimale Emissionen, weisen ein optimales Teillastverhalten auf und sind im wesentlichen frei von mechanischem Verschleiß.

Die Erfindung wird nun auf exemplarische Weise an Hand von Ausführungsbeispielen unter Bezugnahme auf die beiliegende Zeichnung näher erläutert. Es zeigen.
- Figur 1: das Anlagenschema eines erfindungsgemäßen Brennstoffzellensystems,
- Figur 2: in schematischer, perspektivischer Ansicht eine erfindungsgemäße Verdampker-Vorrichtung in Mikrostrukturtechnik und
- Figur 3: in schematischer Draufsicht eine erste Schicht der Vorrichtung in Mikrostrukturtechnik mit einer Anzahl von Mikrokanälen.

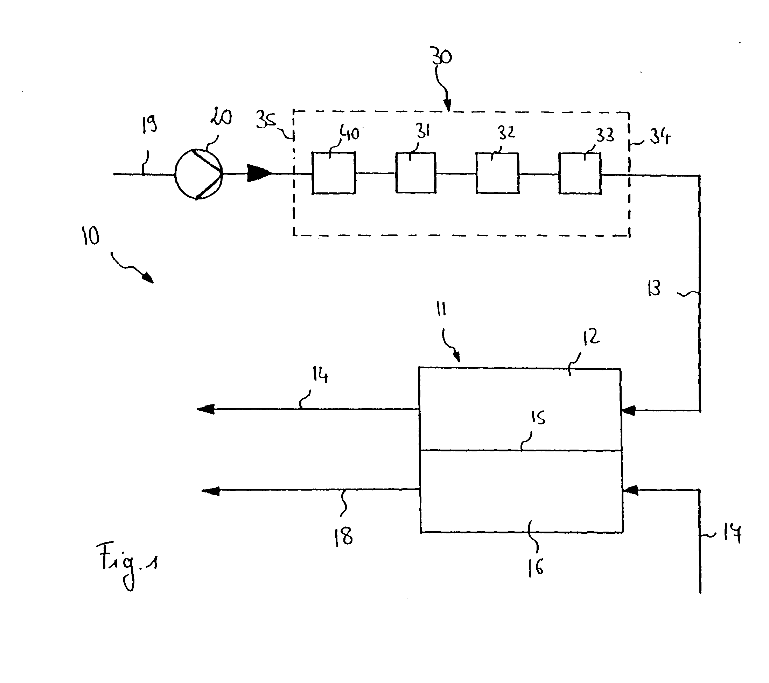

In Figur 1 ist ein Brennstoffzellensystem 10 dargestellt, das im vorliegenden Fall zum Betreiben eines elektrischen Antriebs in einem nicht dargestellten Fahrzeug verwendet wird.

Das Brennstoffzellensystem 10 weist eine oder mehrere Brennstoffzellen 11 auf, mit jeweils einem Anodenraum 12, einem Kathodenraum 16 und einer dazwischen liegenden Membran 15. Der Anodenraum 12 ist mit einer Zuleitung 13 und einer Ableitung 14 für einen Brennstoff, im vorliegenden Fall Wasserstoff, verbunden. Der Kathodenraum 16 ist mit einer Zuleitung 17 und einer Ableitung 18 für ein Oxidationsmittel, im vorliegenden Fall Sauerstoff oder Luft, verbunden.

Weiterhin ist eine Vorrichtung 30 zum Erzeugen/Aufbereiten des Brennstoffs vorgesehen, die über eine Anzahl von Reaktorelementen verfügt. Im vorliegenden Fall sind diese Reaktorelemente als Verdampfer 40, Reformer 31, Shift-Reaktor 32 und selektive Oxidation 33 ausgebildet. An ihrer Ausgangsseite 34 ist die Vorrichtung 30 mit der Brennstoffzuleitung 13 verbunden. An ihrer Eingangsseite 35 ist die Vorrichtung 30 über eine Kraftstoffzuleitung 19 mit einem nicht dargestellten Kraftstofftank verbunden. Im Kraftstofftank befindet sich das Ausgangsmaterial für den Brennstoff (Kraftstoff), beispielsweise Methanol, Benzin, Ethanol oder dergleichen, aus dem in der Vorrichtung 30 der Brennstoff, das heißt Wasserstoff, hergestellt wird. In der Kraftstoffzuleitung 19 ist eine als Pumpe ausgebildete Fördereinrichtung 20 vorgesehen.

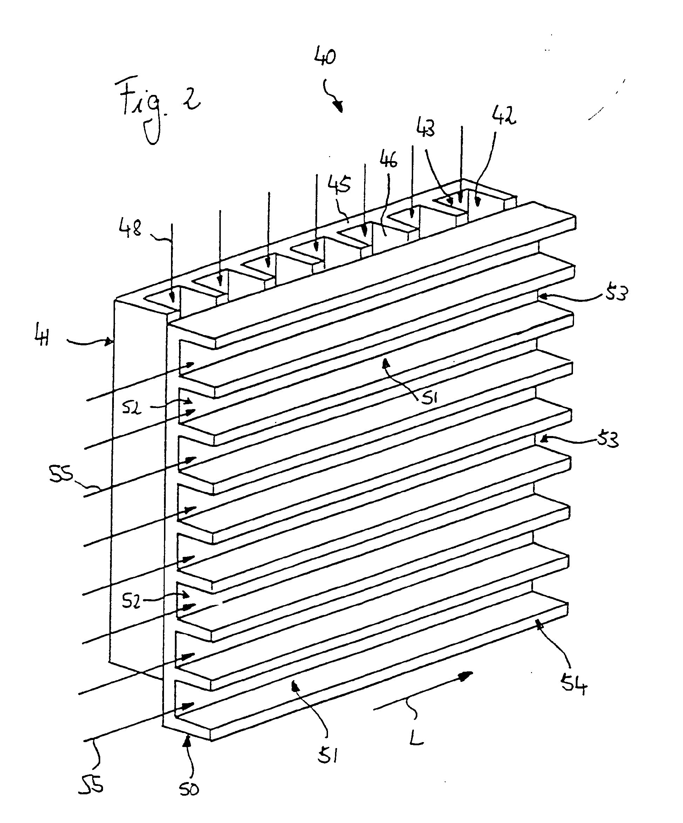

Der Verdampfer 40 der Vorrichtung 30 zum Erzeugen/Aufbereiten des Brennstoffs ist in Mikrostrukturtechnik ausgebildet und ist ausschnittsweise schematisch in Figur 2 dargestellt. Er zeigt einen schichtförmigen Aufbau mit einer ersten Schicht 41, die eine Anzahl von Mikrokanälen 42 aufweist. Die einzelnen Mikrokanäle 42 haben Eintrittsöffnungen 43 mit viereckigem Querschnitt. Die Mikrokanäle 42 werden durch zwei seitliche Kanalwände 46 sowie zwei als Bodenwand beziehungsweise Deckenwand dienende Kanalwände 45 gebildet. Da die Mikrokanäle 42 als offene Nutstrukturen geformt sind, wird die als Deckenwand dienende Kanalwand 45 der ersten Schicht 41 durch den jeweiligen Boden einer unmittelbar benachbarten zweiten Schicht 50 gebildet. Die Mikrokanäle 42 werden von dem zu verdampfenden flüssigen Medium durchströmt, im vorliegenden Fall von dem als Ausgangsmaterial für den herzustellenden Brennstoff eingesetzten flüssigen Kraftstoff. Die Strömungsrichtung des flüssigen, zu verdampfenden Mediums ist dabei durch die Pfeile 48 dargestellt.

Die zweite Schicht 50 weist ebenfalls eine Anzahl von Mikrokanälen 51 auf. Die Mikrokanäle 51 verfügen jeweils über eine Eintrittsöffnung 52 sowie eine Austrittsöffnung 53. Durch die Mikrokanäle 51 strömt ein Wärmeträgermedium, beispielsweise ein Öl oder dergleichen, welches die zur Verdampfung des flüssigen Mediums erforderliche Wärme einbringt. Das Wärmeträgermedium wird vorzugsweise über eine geeignete Heizquelle außerhalb des Verdampfers 40 erhitzt und in erhitztem Zustand in die Mikrokanäle 51 eingeleitet. Die Strömungsrichtung des Wärmeträgermediums ist durch die Pfeile 55 dargestellt.

Gemäß anderen Ausführungsformen können die Mikrokanäle 51 beispielsweise mit einer katalytischen Schicht beschichtet sein. Die erforderliche Wärme kann dann direkt in den Mikrokanälen 51 durch Einleitung eines reaktionsfähigen Gemischs (Kraftstoff/Sauerstoff) erzeugt werden, das durch die Wirkung der katalytischen Beschichtung unter Abgabe von Warme reagiert. Weiterhin ist es auch möglich, die zum Verdampfen des flüssigen Mediums erforderliche Energie über eine elektrische Heizeinrichtung bereitzustellen. So können in speziellen Bohrungen in unmittelbarer Nähe der Mikrokanäle jeweils entsprechende Heizelemente, beispielsweise Heizdrähte, Heizpatronen oder dergleichen, angeordnet sein, die über eine geeignete elektrische Leistungsquelle, beispielsweise eine Batterie oder einen Generator, mit elektrischem Strom versorgt werden. Dadurch heizen sich die Heizelemente auf und können die dabei entstehende Wärme auf das zu verdampfende flüssige Medium übertragen.

Die beiden Schichten 41, 50 gemäß Figur 2 bestehen aus wärmeleitfähigem Material und sind derart miteinander verbunden, dass ein thermischer Austausch zwischen der zu verdampfenden Flüssigkeit und dem Wärmeträgermedium stattfindet. Die Verbindung der einzelnen Schichten 41, 50 kann beispielsweise mittels Diffusionsschweißung erfolgen. Die beiden Schichten 41, 50 sind im vorliegenden Beispiel derart miteinander verbunden, dass die einzelnen Mikrokanäle, 42, 51 in einem rechten Winkel zueinander ausgerichtet sind, so dass diese nach dem "Kreuzstromprinzip" von den jeweiligen Medien durchströmt werden.

In Figur 2 sind der besseren Übersicht halber jeweils nur eine einzige erste Schicht 41 sowie eine einzige zweite Schicht 50 dargestellt. Je nach Bedarf kann der Verdampfer 40 jeweils mehrere Schichten 41 und 51 aufweisen, die dann abwechselnd übereinander gestapelt sind und eine entsprechende Schichtabfolge bilden. In diesem Fall wird eine Schicht 41 für das zu verdampfende Medium von jeweils zwei Schichten 50 für das Wärmeträgermedium flankiert.

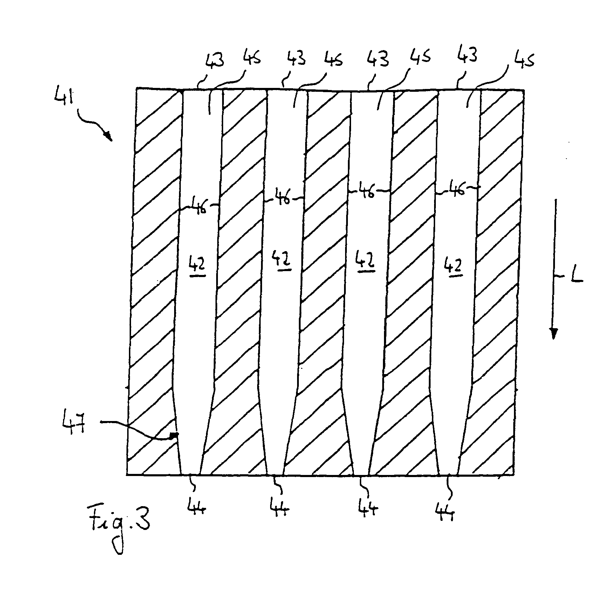

Um eine besonders vorteilhafte Verdampfung der Flüssigkeit ohne die zum Stand der Technik weiter oben beschriebenen Nachteile durchführen zu können, ist erfindungsgemäß vorgesehen, dass die Mikrokanäle von wenigstens einer der Schichten Austrittsöffnungen aufweisen, die flächenmäßig kleiner ausgebildet sind als die jeweiligen Eintrittsöffnungen. Im vorliegenden Fall weist nur die erste Schicht 41, durch die der zu verdampfende Kraftstoff gefördert wird, derartig ausgebildete Mikrokanäle 42 auf. Dies ist in Figur 2 nicht näher dargestellt, sondern geht erst aus der detaillierteren Figur 3 hervor. Alternativ oder zusätzlich ist es auch denkbar, dass die Austrittsöffnungen 44 eine andere geometrische Form als die Eintrittsöffnungen 43 haben.

Wie sich aus Figur 3 ergibt, weisen die Mikrokanäle 42 der ersten Schicht 41 jeweils zwei über einen Grossteil ihrer Längserstreckung L ebene seitliche Kanalwände 46 auf, die sich erst in ihren Endbereichen 47 verjüngen. Auf diese Weise entstehen Austrittsöffnungen 44, die flächenmäßig kleiner sind als die entsprechenden Eintrittsöffnungen 43. Selbstverständlich könnte die Verjüngung auch alternativ oder zusätzlich durch eine entsprechende Formgebung der als Boden oder Decke dienenden Kanalwände 45 erreicht werden. Aus fertigungstechnischen Gründen empfiehlt es sich jedoch, die Kanalwand 45 der Decke, d. h. die Unterseite einer Schicht 41 völlig eben zu gestalten.

Eine derart ausgebildete erste Schicht 41 ist besonders einfach und damit kostengünstig herstellbar. So kann die erste Schicht 41 beispielsweise zunächst als Vollmaterial hergestellt werden. Anschließend werden die Mikrokanäle 42 in der entsprechenden Ausgestaltung in die erste Schicht 41 eingebracht. Dies kann beispielsweise über ein geeignetes Ätzverfahren oder dergleichen erfolgen.

Wie sich aus Figur 3 in Verbindung mit Figur 2 ergibt, weisen die Austrittsöffnungen 44 der Mikrokanäle 42 ebenso wie die Eintrittsöffnungen 43 eine viereckige Querschnittsform auf. Derartige Querschnitte sind besonders einfach herstellbar. Dennoch ist die Erfindung nicht auf solche Querschnitte beschränkt, so dass die Austrittsöffnungen 44 auch andere Querschnitte, beispielsweise runde, ovale, elliptische Querschnitte oder Querschnitte mit Sondergeometrien aufweisen können.

Nachfolgend wird nun die Funktionsweise eines derart ausgebildeten Verdampfers 40 beschrieben.

Das zu verdampfende flüssige Medium tritt über die Kraftstoffzuleitung 19 in die Mikrokanäle 42 der ersten Schicht 41 beziehungsweise der ersten Schichten 41 ein. Über die Pumpe 20 sowie die sich an den Endbereichen 47 verjüngenden Mikrokanäle 42 wird erreicht, dass sich das zu verdampfende flüssige Medium in den Mikrokanälen 42 unter erhöhtem Druck befindet.

Wenn nun durch die Mikrokanäle 51 der zweiten Schicht 50 ein auf erhöhter Temperatur befindliches Wärmeträgermedium hindurchgeleitet wird, wird ein Grossteil der im Wärmeträgermedium gespeicherten Wärmeenergie auf das zu verdampfende flüssige Medium übertragen. Da sich das zu verdampfende flüssige Medium in den Mikrokanälen 42 im Vergleich zum Normaldruck auf einem erhöhten Druck befindet, verbleibt es trotz Temperaturerhöhung als überhitzte Flüssigkeit zunächst im flüssigen Zustand, obwohl es unter Normaldruck längst verdampfen würde. Wenn es die Mikrokanäle 42 über die kleineren Austrittsöffnungen 44 verlässt, wird das flüssige Medium entspannt und schlagartig vom flüssigen in den gasförmigen Zustand überführt. Durch den schlagartigen Übergang des erhitzten flüssigen Mediums in den gasförmigen Zustand wird verhindert, dass austretende Bestandteile des Mediums aus dem Verdampfer 40 noch flüssig bleiben und in den Reformer 31 eingeleitet werden können. Auch die Gefahr einer möglichen "Pulsation", wie sie im Hinblick auf den Stand der Technik beschrieben worden ist, wird durch den erfindungsgemäß ausgestalteten Verdampfer 40 vermieden.

Die Mikrokanäle 42 sind über ihre Austrittsöffnungen 44 mit einem nicht dargestellten Expansionsraum verbunden. Dieser Expansionsraum muss von seiner Raumform und seinem Raumvolumen her so gewählt werden, dass das unter erhöhtem Druck in den Mikrokanälen befindliche zu verdampfende Medium nach dem Prinzip der überhitzten Flüssigkeit beim Austritt aus den Austrittsöffnungen 44 ohne Schwierigkeiten auf Normaldruck expandieren kann, wodurch der schlagartige Übergang vom flüssigen in den dampfförmigen Zustand erfolgt.

Der Expansionsraum kann beispielsweise ein Leitungsrohrabschnitt sein, der den Verdampfer 40 mit dem nachfolgenden Reformer 31 verbindet. Ebenso ist es möglich, dass sich der Reformer 31 direkt an den Verdampfer 40 anschließt. In diesem Fall ist der Expansionsraum vorteilhaft als Teilbereich des Reformers 31 ausgebildet.

### Bezugszeichenliste

- 10: = Brennstoffzellensystem
- 11: = Brennstoffzelle
- 12: = Anodenraum
- 13: = Brennstoffzuleitung
- 14: = Brennstoffableitung (Anodenabgas)
- 15: = Membran
- 16: = Kathodenraum
- 17: = Oxidationsmittelzuleitung
- 18: = Oxidationsmittelableitung (Kathodenabgas)
- 19: = Kraftstoffzuleitung
- 20: = Fördereinrichtung (Pumpe)

- 30: = Vorrichtung zum Erzeugen/Aufbereiten von Brennstoff
- 31: = Reformer
- 32: = Shift-Reaktor
- 33: = selektive Oxidation
- 34: = Ausgangsseite
- 35: = Eingangsseite

- 40: = Vorrichtung in Mikrostrukturtechnik (Verdampfer)
- 41: = erste Schicht
- 42: = Mikrokanal
- 43: = Eintrittsöffnung
- 44: = Austrittsöffnung
- 45: = Kanalwand (Boden/Decke)
- 46: = Kanalwand (Seite)
- 47: = Endbereich
- 48: = Strömungsrichtung des zu verdampfenden Mediums
- 50: = zweite Schicht
- 51: = Mikrokanal
- 52: = Eintrittsöffnung
- 53: = Austrittsöffnung
- 54: = Endbereich
- 55: = Strömungsrichtung des Wärmeträgermediums

- L: = Längsausdehnung der Mikrokanäle

## Patentansprüche

1. Verdampfer-Vorrichtung in Mikrostrukturtechnik, die einen schichtförmigen Aufbau aufweist, mit wenigstens einer ersten homogenen Schicht (41), die eine Anzahl von Mikrokanälen (42) aufweist, und mit wenigstens einer zweiten homogenen Schicht (50), die eine Anzahl von Mikrokanälen (51) aufweist, wobei die Mikrokanäle (42; 51) jeweils eine durch die Strömungsrichtung des Mediums festgelegte Eintrittsöffnung (43; 52) und Austrittsöffnung (44; 53) aufweisen,
**dadurch gekennzeichnet,**
**dass** die Austrittsöffnungen (44, 53) der Mikrokanäle (42; 51) der ersten (41) und/oder zweiten (50) Schicht im Querschnitt flächenmäßig kleiner ausgebildet sind als deren jeweilige Eintrittsöffnungen (43; 52) und/oder dass die Austrittsöffnungen (44; 53) der Mikrokanäle (42; 51) der ersten (41) und/oder zweiten (50) Schicht eine andere geometrische Form aufweisen als deren jeweilige Eintrittsöffnungen (43; 52), derart, dass in den Mikrokanälen (42; 51) der Strömungswiderstand für das zu verdampfende Medium zu den Austrittsöffnungen (44; 53) hin erhöht wird.

2. Verdampfer-Vorrichtung nach Anspruch 1, **dadurch gekennzeichnet, dass** sich die Mikrokanäle (42; 51) der ersten(41) und/oder zweiten (50) Schicht zwischen den Eintrittsöffnungen (43; 52) und den Austrittsöffnungen (44; 53) jeweils zu den Austrittsöffnungen (44; 53) hin verjüngen.

3. Verdampfer-Vorrichtung nach Anspruch 2, **dadurch gekennzeichnet, dass** sich die Mikrokanäle (42; 51) der ersten (41) und/oder zweiten (50) Schicht in ihrer Längsrichtung (L) über die gesamte Länge kontinuierlich oder nur in ihren Endbereichen (47) verjüngen.

4. Verdampfer-Vorrichtung nach einem der Ansprüche 1 bis 3, **dadurch gekennzeichnet, dass** die Wände (45; 46) der Mikrokanäle (42; 51) der ersten (41) und/oder zweiten (50) Schicht aus im wesentlichen ebenen Wandabschnitten gebildet sind.

5. Verdampfer-Vorrichtung nach Anspruch 4, **dadurch gekennzeichnet, dass** die sich gegenüberliegenden seitlichen Kanalwände (46) über den größten Teil ihrer axialen Länge parallel zueinander verlaufen und in einem Endbereich (47) bis zur Austrittsöffnung (44) jeweils in einem kürzeren Wandabschnitt in einem spitzen Winkel aufeinander zu laufen.

6. Verdampfer-Vorrichtung nach einem der Ansprüche 1 bis 5, **dadurch gekennzeichnet, dass** die Mikrokanäle (42; 51) der ersten (41) und/oder zweiten (50) Schicht eine turbulenzfördernde Oberflächenstruktur aufweisen oder dass wenigstens eine der Wände (46) der Mikrokanäle (42; 51) uneben, insbesondere wellenförmig ausgebildet ist.

7. Verdampfer-Vorrichtung nach einem der Ansprüche 1 bis 3 oder 6, **dadurch gekennzeichnet, dass** diejenigen Austrittsöffnungen (44; 53), die flächenmäßig kleiner als die Eintrittsöffnungen (43; 52) ausgebildet sind und/oder eine andere geometrische Form als diese aufweisen, einen runden, ovalen oder elliptischen Querschnitt aufweisen.

8. Verdampfer-Vorrichtung nach einem der Ansprüche 1 bis 6, **dadurch gekennzeichnet, dass** diejenigen Austrittsöffnungen (44; 53), die flächenmäßig kleiner als die Eintrittsöffnungen (43; 52) ausgebildet sind und/oder eine andere geometrische Form als diese aufweisen, einen mehreckigen Querschnitt aufweisen.

9. Verdampfer-Vorrichtung nach einem der Ansprüche 1 bis 8, **dadurch gekennzeichnet, dass** jeweils mehrere erste Schichten (41) und mehrere zweite Schichten (50) in alternierender Folge vorgesehen sind.

10. Verdampfer-Vorrichtung nacheinen) der Ansprüche 1 bis 9, **dadurch gekennzeichnet, dass** die Längsachsen der, Mikrokanäle (42; 51) der ersten Schicht (41) und der zweiten Schicht (50) winklig zueinander, insbesondere in einem rechten Winkel zueinander, ausgerichtet sind.

11. Verdampfer-Vorrichtung nach einem der Ansprüche 1 bis 9, **dadurch gekennzeichnet, dass** die Mikrokanäle (42; 51) der ersten Schicht (41) und der zweiten Schicht (50) parallel zueinander ausgerichtet sind.

12. Verdampfer-Vorrichtung nach einem der Ansprüche 1 bis 11, **dadurch gekennzeichnet, dass** die Eintrittsöffnungen (43) der ersten Schicht (41) mit einer Zuleitung für ein zu verdampfendes Medium und die Eintrittsöffnungen (52) der zweiten Schicht mit einer Zuleitung für ein Wärmeträgermedium verbindbar sind.

13. Brennstoffzellensystem, mit einer oder mehreren Brennstoffzellen (11), die wenigstens eine Zuleitung (13) und wenigstens eine Ableitung (14) für einen Brennstoff sowie wenigstens eine Zuleitung (17) und wenigstens eine Ableitung (18) für ein Oxidationsmittel aufweist/ aufweisen, und mit einer Vorrichtung (30) zum Erzeugen/Aufbereiten des Brennstoffs, die eine Anzahl von Reaktorelementen (31,32,33,40) aufweist, wobei wenigstens eines der Reaktorelemente als Verdampfer-Vorrichtung (40) nach einem der Ansprüche 1 bis 12 ausgebildet ist.

14. Brennstoffzellensystem nach Anspruch 13, **dadurch gekennzeichnet, dass** die Mikrokanäle (42; 51) derjenigen Schicht (41; 50) oder Schichten der Vorrichtung (40), die eine gegenüber der Eintrittsöffnung (43; 52) flächenmäßig kleinere und/oder geometrisch anders geformte Austrittsöffnung (44; 53) aufweisen, eintrittsseitig mit einer Zuleitung (19) für einen flüssigen Kraftstoff verbunden sind, in der eine Fördereinrichtung, insbesondere eine Pumpe (20), angeordnet ist.

15. Brennstoffzellensystem nach Anspruch 13 oder 14, **dadurch gekennzeichnet, dass** die Mikrokanäle (42; 51) derjenigen Schicht (41; 50) oder Schichten der Vorrichtung (40), die eine flächenmäßig gegenüber der Eintrittsöffnung (43; 52) kleinere und/oder geometrisch anders geformte Austrittsöffnung (44; 53) aufweisen, austrittsseitig mit einem Expansionsraum verbunden sind.

16. Brennstoffzellensystem nach Anspruch 15, **dadurch gekennzeichnet, dass** der Expansionsraum der Vorrichtung (40) Teil einer abgehenden Rohrleitung oder Teil eines unmittelbar anschließenden Reformers (31) ist.

## Claims

1. Evaporation apparatus in microengineering technology, having a layered structure, with at least one first homogeneous layer (41) which comprises a number of microchannels (42), and with at least one second homogeneous layer (50) which comprises a number of microchannels (51), the microchannels (42; 51) each having an inlet opening (43; 52) and outlet opening (44; 53) determined by the direction of flow of the medium, **characterised in that** the outlet openings (44; 53) of the microchannels (42; 51) of the first (41) and/or second (50) layer are smaller in cross-sectional area than the respective inlet openings (43; 52), and/or the outlet openings (44; 53) of the microchannels (42; 51) of the first (41) and/or second (50) layer have a different geometric shape from the respective inlet openings (43; 52), such that in the microchannels (42; 51) the flow resistance for the medium which is to be evaporated increases towards the outlet openings (44; 53).

2. Evaporation apparatus according to claim 1, **characterised in that** the microchannels (42; 51) of the first (41) and/or second (50) layer between the inlet openings (43; 52) and the outlet openings (44; 53) become narrower towards the outlet openings (44; 53).

3. Evaporation apparatus according to claim 2, **characterised in that** the microchannels (42; 51) of the first (41) and/or second (50) layer become narrower continuously over their entire length in the longitudinal direction (L) or only in their end regions (47).

4. Evaporation apparatus according to one of claims 1 to 3, **characterised in that** the walls (45; 46) of the microchannels (42; 51) of the first (41) and/or second (50) layer are formed from substantially planar wall portions.

5. Evaporation apparatus according to claim 4, **characterised in that** the opposing lateral channel walls (46) run parallel to one another over the majority of their axial length and converge with one another at an acute angle in an end region (47) up to the outlet opening (44) in a shorter wall portion.

6. Evaporation apparatus according to one of claims 1 to 5, **characterised in that** the microchannels (42; 51) of the first (41) and/or second (50) layer have a turbulence-promoting surface structure or at least one of the walls (46) of the microchannels (42; 51) is of uneven, particularly corrugated structure.

7. Evaporation apparatus according to one of claims 1 to 3 or 6, **characterised in that** the outlet openings (44; 53) which are smaller in surface area than the inlet openings (43; 52) and/or have a different geometric shape from the latter have a round, oval or elliptical cross section.

8. Evaporation apparatus according to one of claims 1 to 6, **characterised in that** the outlet openings (44; 53) which are smaller in surface area than the inlet openings (43; 52) and/or have a different geometric shape from the latter are polygonal in cross section.

9. Evaporation apparatus according to one of claims 1 to 8, **characterised in that** a plurality of first layers (41) and a plurality of second layers (50) are provided in an alternating sequence.

10. Evaporation apparatus according to one of claims 1 to 9, **characterised in that** the longitudinal axes of the microchannels (42; 51) of the first layer (41) and of the second layer (50) are aligned at an angle to one another, particularly at a right angle to one another.

11. Evaporation apparatus according to one of claims 1 to 9, **characterised in that** the microchannels (42; 51) of the first layer (41) and of the second layer (50) are aligned parallel to one another.

12. Evaporation apparatus according to one of claims 1 to 11, **characterised in that** the inlet openings (43) of the first layer (41) are connectable to a feed line for a medium which is to be evaporated and the inlet openings (52) of the second layer are connectable to a feed line for a heat carrying medium.

13. Fuel cell system, having one or more fuel cells (11) which comprise at least one feed line (13) and at least one discharge line (14) for a fuel and at least one feed line (17) and at least one discharge line (18) for an oxidising agent, and with a device (30) for generating/preparing the fuel, which has a number of reactor elements (31; 32; 33; 40), at least one of the reactor elements being constructed as an evaporation apparatus (40) according to one of claims 1 to 12.

14. Fuel cell system according to claim 13, **characterised in that** the microchannels (42; 51) of the layer (41; 50) or layers of the apparatus (40) which have an outlet opening (44; 53) which is smaller in area and/or of a different geometric shape than the inlet opening (43; 52) are connected at the inlet end to a feed line (19) for a liquid fuel, in which a conveying device, particularly a pump (20) is disposed.

15. Fuel cell system according to claim 13 or 14, **characterised in that** the microchannels (42; 51) of the layer (41; 50) or layers of the device (40) which have an outlet opening (44; 53) which is smaller in area and/or of a different geometric shape than the inlet opening (43; 52) are connected at the outlet end to an expansion chamber.

16. Fuel cell system according to claim 15, **characterised in that** the expansion chamber of the device (40) is part of an outgoing pipe or part of a reformer (31) which is immediately adjacent.

## Revendications

1. Évaporateur microstructuré, qui présente une structure en couches, avec au moins une première couche homogène (41) qui présente un nombre de microcanaux (42), et avec au moins une deuxième couche homogène (50) qui présente un nombre de microcanaux (51), les microcanaux (42 ; 51) présentant chacun un orifice d'entrée (43 ; 52) et un orifice de sortie (44 ; 53) définis par le sens d'écoulement du fluide,
**Caractérisé**
**en ce que** les orifices de sortie (44 ; 53) des microcanaux (42 ; 51) de la première (41) et/ou de la deuxième (50) couche présentent, en coupe transversale, une surface plus petite que celle de leurs orifices d'entrée correspondants (43 ; 52) et/ou en ce que les orifices de sortie (44 ; 53) des microcanaux (42 ; 51) de la première (41) et/ou la deuxième (50) couche présentent une autre forme géométrique que celle de leurs orifices d'entrée correspondants (43 ; 52), si bien que dans les microcanaux (42 ; 51), la résistance à l'écoulement pour le fluide à évaporer vers les orifices de sortie (44 ; 53) est augmentée.

2. Évaporateur selon la revendication 1, **caractérisé en ce que** les microcanaux (42 ; 51) de la première (41) et/ou de la deuxième (50) couche se rétrécissent entre les orifices d'entrée (43 ; 52) et les orifices de sortie (44 ; 53) toujours en direction des orifices de sortie (44 ; 53).

3. Évaporateur selon la revendication 2, **caractérisé en ce que** les microcanaux (42 ; 51) de la première (41) et/ou de la deuxième (50) couche se rétrécissent en continu dans leur sens longitudinal (L) sur toute la longueur ou uniquement à leurs extrémités (47).

4. Évaporateur selon l'une quelconque des revendications 1 à 3, **caractérisé en ce que** les parois (45 ; 46) des microcanaux (42 ; 51) de la première (41) et/ou de la deuxième (50) couche sont formées de sections de paroi essentiellement plates.

5. Évaporateur selon la revendication 4, **caractérisé en ce que** les parois latérales de canal (46) se faisant face s'étendent parallèlement l'une à l'autre sur la majeure partie de leur longueur axiale et, à une extrémité (47) allant jusqu'à l'orifice de sortie (44), avancent à angle aigu en direction l'une de l'autre et sur une section de paroi plus courte.

6. Évaporateur selon l'une quelconque des revendications 1 à 5, **caractérisé en ce que** les microcanaux (42 ; 51) de la première (41) et/ou de la deuxième (50) couche présentent une structure superficielle à turbulence ou **en ce que** au moins l'une des parois (46) des microcanaux (42 ; 51) présente une forme inégale, en particulier une forme ondulée.

7. Évaporateur selon l'une quelconque des revendications 1 à 3 ou 6, **caractérisé en ce que** les orifices de sortie (44 ; 53), dont la surface est plus petite que celle des orifices d'entrée (43 ; 52) et/ou qui possèdent une autre forme géométrique que ces derniers, présentent une section transversale circulaire, ovale ou elliptique.

8. Évaporateur selon l'une quelconque des revendications 1 à 6, **caractérisé en ce que** les orifices de sortie (44 ; 53), dont la surface est plus petite que celle des orifices d'entrée (43 ; 52) et/ou qui possèdent une autre forme géométrique que ces derniers, présentent une section transversale polygonale.

9. Évaporateur selon l'une quelconque des revendications 1 à 8, **caractérisé en ce que** plusieurs premières couches (41) et plusieurs deuxièmes couches (50) sont prévues en alternance.

10. Évaporateur selon l'une quelconque des revendications 1 à 9, **caractérisé en ce que** les axes longitudinaux des microcanaux (42 ; 51) de la première couche (41) et de la deuxième couche (50) sont orientés à un certain angle les uns par rapport aux autres, en particulier à angle droit.

11. Évaporateur selon l'une quelconque des revendications 1 à 9, **caractérisé en ce que** les microcanaux (42 ; 51) de la première couche (41) et de la deuxième couche (50) sont orientés parallèlement les uns par rapport aux autres.

12. Évaporateur selon l'une quelconque des revendications 1 à 11, **caractérisé en ce que** les orifices d'entrée (43) de la première couche (41) peuvent être raccordés à une conduite d'alimentation pour un fluide à évaporer et les orifices d'entrée (52) de la deuxième couche peuvent être raccordés à une conduite d'alimentation pour un fluide caloporteur.

13. Système de piles à combustible, avec une ou plusieurs pile(s) à combustible (11), qui comporte/comportent au moins une conduite d'alimentation (13) et au moins une conduite d'évacuation (14) pour un combustible ainsi qu'au moins une conduite d'alimentation (17) et au moins une conduite d'évacuation (18) pour un agent d'oxydation, et avec un dispositif (30) de génération/préparation du combustible, qui comporte un nombre d'éléments de réacteur (31, 32, 33, 40), au moins un des éléments de réacteur étant conçu sous forme d'évaporateur (40) selon l'une quelconques des revendications 1 à 12.

14. Système de piles à combustible selon la revendication 13, **caractérisé en ce que** les microcanaux (42 ; 51) de la couche (41 ; 50) ou des couches du dispositif (40), qui possèdent un orifice de sortie (44 ; 53) d'une surface inférieure et/ou d'une autre forme géométrique par rapport à l'orifice d'entrée (43 ; 52), sont reliés côté entrée à la conduite d'alimentation (19) pour un carburant liquide dans laquelle est disposé un dispositif de refoulement, en particulier une pompe (20).

15. Système de piles à combustible selon la revendication 13 ou 14, **caractérisé en ce que** les microcanaux (42 ; 51) de la couche (41 ; 50) ou des couches du dispositif (40), qui présentent un orifice de sortie (44 ; 53) d'une surface inférieure et/ou d'une autre forme géométrique par rapport à l'orifice d'entrée (43 ; 52), sont reliés côté sortie à une chambre d'expansion.

16. Système de piles à combustible selon la revendication 15, **caractérisé en ce que** la chambre d'expansion du dispositif (40) est un élément d'une conduite de départ ou d'un reformeur (31) suivant immédiatement.
